# EUROPÄISCHE PATENTSCHRIFT

(11) **EP 2 420 425 B1**
(45) Veröffentlichungstag und Bekanntmachung des Hinweises auf die Patenterteilung: **24.04.2013**
(21) Anmeldenummer: 11176914.7
(22) Anmeldetag: 09.08.2011
(51) Int. Cl.: B61D 17/02, B61D 17/06, B61H 11/10, B60T 1/16

(54) **Wagenkasten für Schienenfahrzeuge**
Body of a vehicle for rail vehicles
Caisse de voiture pour véhicules ferroviaires

(30) Priorität: 17.08.2010 DE 102010039391
(43) Veröffentlichungstag der Anmeldung: 22.02.2012
(73) Patentinhaber: Deutsches Zentrum für Luft- und Raumfahrt e.V., 51147 Köln (DE)
(72) Erfinder: König, Jens, 71120 Grafenau (DE); Kopp, Gerhard, 71155 Altdorf (DE); Dr. Winter, Joachim, 89284 Pfaffenhofen (DE)
(74) Vertreter: Hoeger, Stellrecht & Partner Patentanwälte

(56) Entgegenhaltungen:
- WO-A1-2007/073273
- DE-C- 635 630
- FR-A- 614 290
- US-A- 2 024 394
- US-A- 2 041 872

## Beschreibung

Die Erfindung betrifft einen Wagenkasten für Schienenfahrzeuge, umfassend ein Hauptsegment und ein sich ausgehend von dem Hauptsegment entgegengesetzt zu einer Fahrtrichtung von einer vollen Querschnittsfläche des Hauptsegments zu einem Ende verjüngendes Endsegment.

Derartige Wagenkästen sind bei heutigen Hochgeschwindigkeitszügen, z. B. aus der US-A- 2 041 872, bekannt.

Bei den heutigen Hochgeschwindigkeitszügen besteht allerdings das Problem, dass eine Bremsung lediglich über die Wechselwirkung zwischen Rad und Schiene und/oder über Magnet- oder Wirbelstrombremsen möglich ist, wobei die Wechselwirkung zwischen Rad und Schiene aufgrund der bestehenden Reibungsverhältnisse nur in begrenztem Umfang Bremskräfte aufnehmen kann.

Der Erfindung liegt daher die Aufgabe zugrunde, die Bremsmöglichkeiten für einen Wagenkasten der gattungsgemäßen Art zu verbessern.

Diese Aufgabe wird bei einem Wagenkasten für Schienenfahrzeuge mit den Merkmalen des Anspruchs 1 gelöst.

Der Vorteil der erfindungsgemäßen Lösung ist darin zu sehen, dass durch das mindestens eine Strömungshinderungselement eine Möglichkeit geschaffen wird, eine zusätzliche Bremsung des Wagenkastens zu bewirken, ohne dass eine weitere Belastung der Wechselwirkung zwischen Rad und Schiene erforderlich ist.

Dabei ist das mindestens eine Strömungshinderungselement durch einen Abschnitt des Endsegments gebildet, welcher bei einer Bewegung von der inaktiven Stellung in die aktive Stellung entgegengesetzt zur Fahrtrichtung bewegbar ist.

Damit besteht in einfacher Weise die Möglichkeit, die Außenströmungen zu behindern und somit die Bremswirkung zu erzeugen.

Ferner ist das mindestens eine Strömungshinderungselement durch eine Endkappe des Endsegments gebildet, welche bei einer Bewegung von der inaktiven in die aktive Stellung von dem sich an das Hauptsegment anschließenden Endsegmentstumpf des Endsegments entgegengesetzt zur Fahrtrichtung abhebbar ist.

Eine derartige Lösung ist besonders einfach zu realisieren, da damit die Endkappe als Ganzes von dem Endsegmentstumpf abgehoben werden kann, um die Außenströmung zu behindern.

Ergänzend zum Vorsehen einer Endkappe sieht die erfindungsgemäße Lösung vor, dass das mindestens eine Strömungshinderungselement aus der Endkappe ausfahrbar ist Außerdem ist vorgesehen, dass das mindestens eine Strömungshinderungselement in seiner inaktiven Stellung innerhalb der Außenkontur des Endsegments angeordnet ist und in seiner aktiven Stellung über die Außenkontur des Endsegments nach außen übersteht.

Ein derartiges Strömungshinderungselement ist ebenfalls im Sinne der Erfindung vorteilhaft, um die Außenströmung um Bereich des Endsegments möglichst stark zu behindern.

Eine vorteilhafte Ausführungsform sieht vor, dass die Endkappe eine in der aktiven Stellung angeströmte Wand aufweist, die in der inaktiven Stellung der Endkappe von der den Endabschnitt umströmenden Außenströmung nicht anströmbar ist.

Eine besonders günstige Lösung sieht vor, dass das Strömungshinderungselement in der aktiven Stellung schirmartig über die Außenkontur des Endsegments übersteht.

Dabei bestehen unterschiedliche Möglichkeiten, das schirmartige Strömungshinderungselement in seine aktive Stellung zu bringen.

Eine besonders günstige Lösung, die insbesondere eine sehr große Bremskraft erzeugt, sieht vor, dass das mindestens eine Strömungshinderungselement eine das Endsegment umströmende Außenströmung in ihrer Strömungsrichtung um mindestens 90° umlenkt.

Eine derartige starke Umlenkung der Außenströmung ermöglicht es, eine sehr gute Bremswirkung zu erzielen.

Eine noch vorteilhaftere Bremswirkung lässt sich dann erzielen, wenn die an der Außenkontur des Endbereichs entlanglaufenden Außenströmung in der aktiven Stellung der Endkappe in einem Innenraum der Endkappe eine Umlenkung erfährt und aus einem Kanal als Gegenströmung austritt.

Eine derartige Lösung ermöglicht eine besonders hohe und effiziente Bremswirkung für das Schienenfahrzeug.

Besonders günstig ist es dabei, wenn der Kanal durch ein Strömungsführungselement und eine Wand der Endkappe gebildet ist, so dass sich die Gegenströmung gezielt ausrichten lässt.

Dabei ist es besonders günstig, wenn der Kanal die Gegenströmung so austreten lässt, dass diese einer das Endsegment umgebenden Außenströmung entgegengesetzt gerichtet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine abschnittsweise Darstellung eines bekannten Wagenkastens bei in einer inaktiven Stellung stehendem Strömungshinderungselement in Form einer Endkappe;
- Fig. 2: eine Darstellung ähnlich Fig. 1 bei in der aktiven Stellung stehendem Strömungshinderungselement in Form der Endkappe;
- Fig. 3: eine Darstellung ähnlich Fig. 2 eines Ausführungsbeispiels eines erfindungsgemäßen Wagenkastens bei in einer aktiven Stellung stehenden Strömungshinderungselementen in Form einer Endkappe und schirmartigen Luftleitelementen;
- Fig. 4: eine perspektivische Darstellung der Strömungshinderungselemente des Ausführungsbeispiels mit Draufsicht von hinten;
- Fig. 5: eine seitliche Darstellung des Ausführungsbeispiels bei in der aktiven Stellung stehenden Strömungshinderungselementen und
- Fig. 6: einen Schnitt längs Linie 6-6 in Fig. 4.

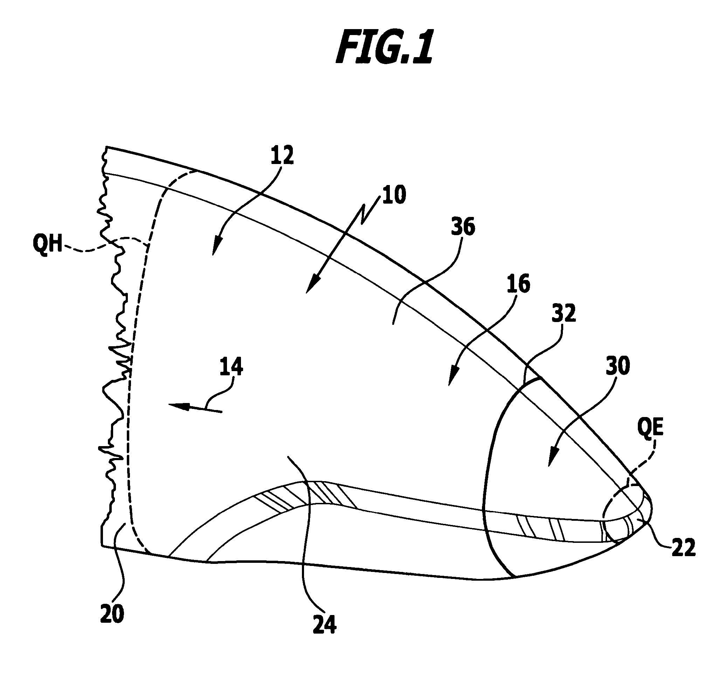

Der in Fig. 1 teilweise dargestellten Wagenkasten 10 umfasst ein Hauptsegment 12 sowie ein sich entgegengesetzt zu einer Fahrtrichtung 14 an das Hauptsegment 12 anschließendes Endsegment 16, welches eine sich ausgehend von einer Außenkontur 20 des Hauptsegments eine sich bis zu einem Ende 22 verjüngende Außenkontur 24 aufweist, wobei im Bereich der Außenkontur 20 des Hauptsegments 12 die Querschnittsfläche QH vorliegt, die sich mit zunehmendem Verlauf der Außenkontur 24 des Endsegments entgegengesetzt zur Fahrtrichtung 40 zunehmend bis zur Außenkontur QE am Ende 22 verringert oder verjüngt.

Die sich von der Außenkontur 20 bis zum Ende 22 zunehmend verjüngende Außenkontur 24 führt dabei zu einem Luftwiderstand des Endsegments 16 (CW-Wert) in der Größenordnung von < 0,2. Das Endsegment 16 umfasst dabei eine sich ausgehend vom Ende 22 in der Fahrtrichtung 14 erstreckende Endkappe 30, welche durch eine Trennlinie 32 von dem zwischen der Endkappe 30 und dem Hauptsegment 12 liegenden Endsegmentstumpf 36 des Endsegments 16 abtrennbar ist.

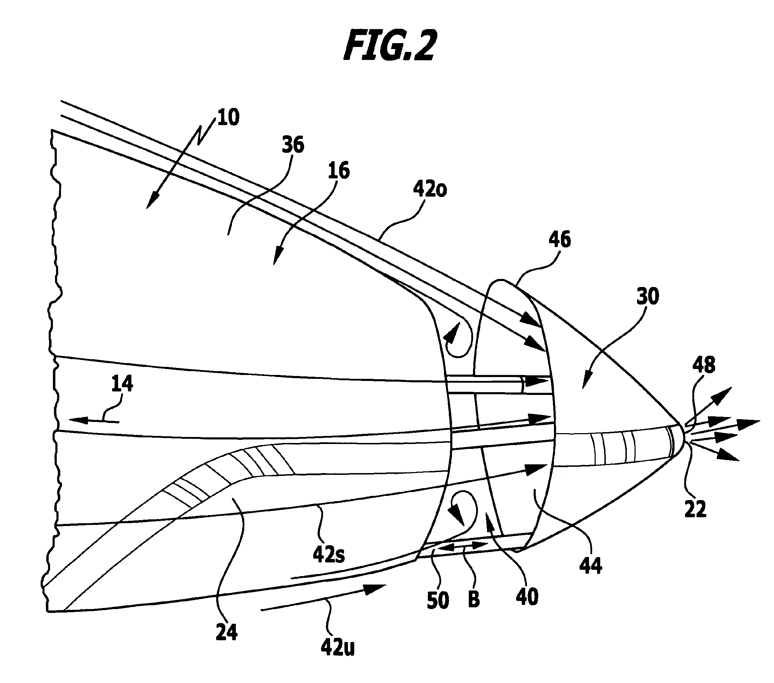

Die Endkappe 30 ist, wie in Fig. 2 dargestellt, entgegengesetzt zur Fahrtrichtung 14 relativ zum Endsegmentstumpf 36 verschiebbar, so dass zwischen dem Endsegmentstumpf 36 und der Endkappe 30 ein Freiraum 40 entsteht, über welchen an der sich verjüngenden Außenkontur 24 entlanglaufende Außenströmungen 42 auf eine Außenwand 46 der Endkappe 30 treffen, die diese in einen Innenraum 44 der Endkappe 30 umlenkt, welcher als Stauraum für die Außenströmungen 42 wirkt und die sich aufstauenden Außenströmungen 42 über eine Endöffnung 48 der Endkappe 30 austreten lässt.

Dadurch, dass die Endkappe 30 in der in Fig. 2 dargestellten aktiven Stellung die ausgehend vom Hauptsegment 12 längs des Endsegments 16 verlaufenden Außenströmungen 42 zumindest zum Teil in ihrem Innenraum 44 aufstaut und über die Endöffnung 48 abströmen lässt, erzeugt die Endkappe 30 eine entgegengesetzt zur Fahrtrichtung 14 gerichtete aerodynamische Bremswirkung auf den Wagenkasten 10.

Zur Übertragung der Bremskräfte von der Endkappe 30 auf den Wagenkasten 10 ist die Endkappe 30 über mehrere sich in einer Bewegungsrichtung B der Endkappe 30 relativ zum Endsegmentstumpf 36 erstreckende Führungseinrichtungen 50 an dem Endsegmentstumpf 36 zwischen der inaktiven Stellung, dargestellt in Fig. 1, und der aktiven Stellung, dargestellt in Fig. 2, bewegbar geführt und sowohl in der inaktiven Stellung als auch in der aktiven Stellung fixierbar.

In der aktiven Stellung, dargestellt in Fig. 2, ist die Endkappe beispielsweise derart angeordnet, dass zumindest obere Außenströmungen 42o und seitliche Außenströmungen 42s in den Innenraum 44 der Endkappe eintreten und gestaut werden, wobei beispielsweise untere Außenströmungen für die Bremswirkung der Endkappe 30 vernachlässigt werden können.

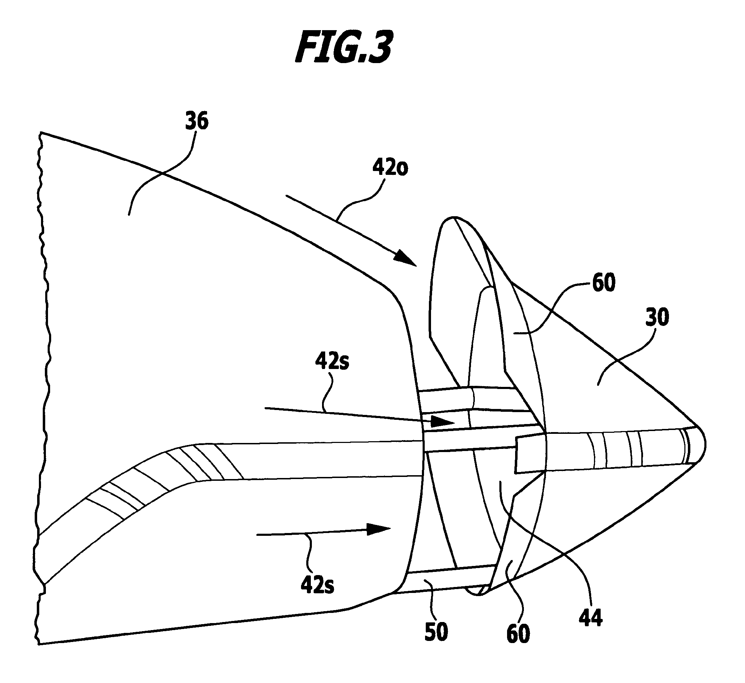

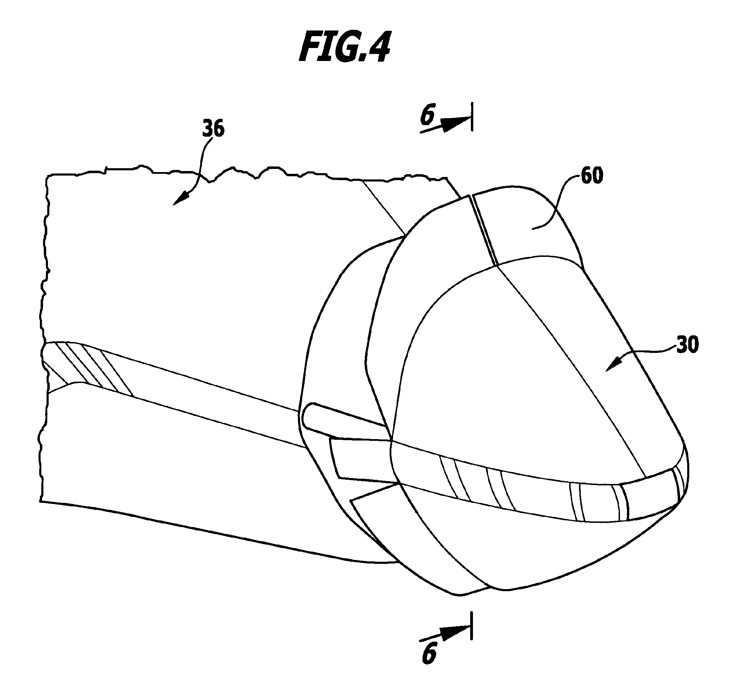

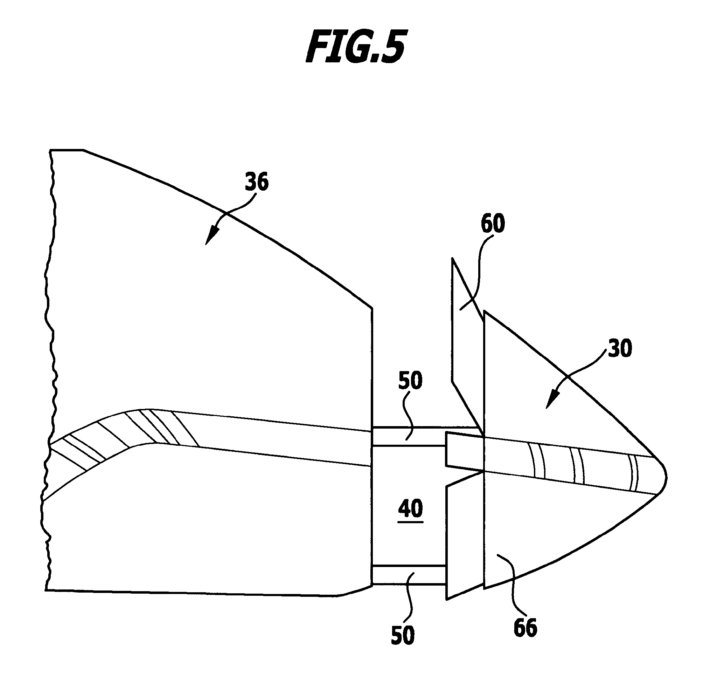

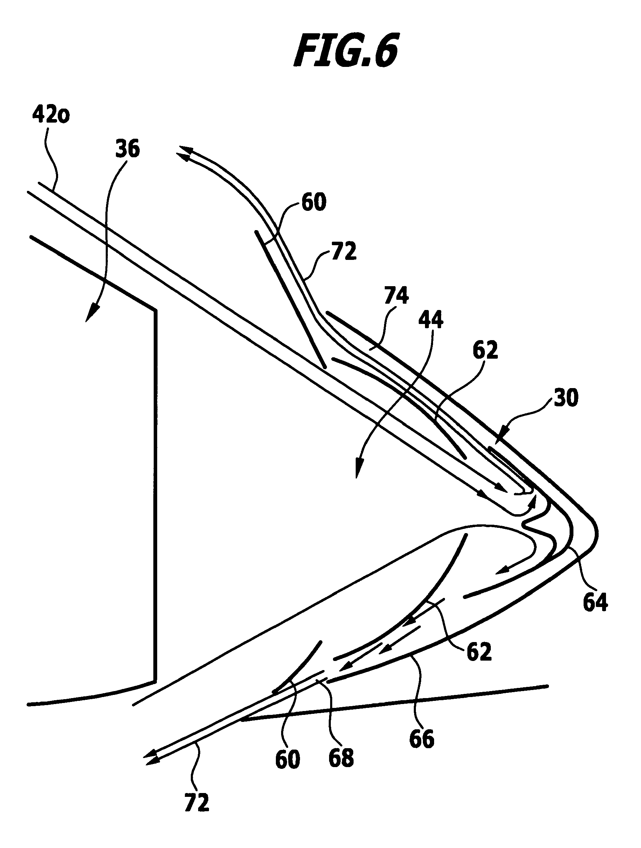

Bei dem Ausführungsbeispiel, dargestellt in den Figuren 3 bis 6, ist die Nasenkappe 30 in gleicher Weise und mit denselben Führungseinrichtungen 50 von der inaktiven Stellung in die aktive Stellung relativ zum Endsegmentstumpf 36 bewegbar, allerdings mit dem Unterschied, dass in der Endkappe 30 noch schirmähnlich ausklappbare Luftleitelemente 60 vorgesehen sind, welche die Ablenkung der Außenströmungen 42o und 42s in den Innenraum 44 der Endkappe 30 noch verbessern, um in der aktiven Stellung in möglichst großem Umfang Außenströmungen 42 in den Innenraum 44 der Endkappe 30 hineinzuführen.

In dem Innenraum 44 der Nasenkappe 30 sind zusätzlich noch seitliche Strömungsführungselemente 62 und ein endseitiges Strömungsführungselement 64 vorgesehen, welche die in den Innenraum 44 eintretenden Außenströmungen 42 in den Außenströmungen 42 entgegenlaufende Gegenströmungen 72 umlenken, die in einem Kanal 74 zwischen den inneren Strömungsführungselementen 62 und einer Außenwand 66 der Endkappe 30 verlaufen und durch einen Zwischenraum 68 zwischen den Außenwänden 66 der Endkappe 30 und den Strömungsumlenkelementen 60 hindurch nach außen treten, um auf einer dem Endsegmentstumpf 36 abgewandten Seite der in den Innenraum 44 eintretenden Außenströmungen 42 diesen entgegenströmen zu können, um somit eine optimale Bremswirkung durch die Endkappe 30 in der aktiven Stellung zu erhalten.

Bei dem Ausführungsbeispiel kann somit die Endöffnung 48 in der Endkappe 30, die gemäß Fig. 1 und 2 vorhanden ist, entfallen.

## Patentansprüche

1. Wagenkasten für Schienenfahrzeuge umfassend ein Hauptsegment (12) und sich ausgehend vom Hauptsegment (12) entgegengesetzt zu einer Fahrtrichtung von einer vollen Querschnittsfläche des Hauptsegments (12) zu einem Ende (22) verjüngendes Endsegment (16), welches mindestens ein Strömungshinderungselement (30, 60) umfasst, welches von einer inaktiven, die Außenströmungen (42) des Endsegments (16) störungsfrei zulassenden Stellung in eine aktive, die Außenströmungen (42) des Endsegments (16) zur Bremswirkung hindernde Stellung bringbar ist, wobei das mindestens eine Strömungshinderungselement (30) durch einen Abschnitt des Endsegments (16) gebildet ist, welcher bei einer Bewegung von der inaktiven Stellung in die aktive Stellung entgegengesetzt zur Fahrtrichtung (14) bewegbar ist, und wobei das mindestens eine Strömungshinderungselement (30) durch eine Endkappe (30) des Endsegments (16) gebildet ist, welche bei einer Bewegung von der inaktiven in die aktive Stellung von dem sich an das Hauptsegment (12) anschließenden Endsegmentstumpf (36) des Endsegments (16) entgegengesetzt zur Fahrtrichtung (14) abhebbar ist,
**dadurch gekennzeichnet, dass** das mindestens eine Strömungshinderungselement ein Luftleitelement (60) umfasst, das ergänzend zu der Endkappe (30) aus der Endkappe (30) ausfahrbar ist und in seiner inaktiven Stellung innerhalb der Außenkontur (24) des Endsegments (16) angeordnet ist und in seiner aktiven Stellung über die Außenkontur (24) des Endsegments (16) nach außen übersteht.

2. Wagenkasten nach Anspruch 1, **dadurch gekennzeichnet, dass** die Endkappe (30) eine in der aktiven Stellung angeströmte Wand (46) aufweist, die in der inaktiven Stellung der Endkappe (30) von der den Endabschnitt (16) umströmenden Außenströmung (42) nicht anströmbar ist.

3. Wagenkasten nach Anspruch 1 oder 2, **dadurch gekennzeichnet, dass** das Strömungshinderungselement (60) in der aktiven Stellung schirmartig über die Außenkontur (24) des Endsegments (16) übersteht.

4. Wagenkasten nach einem der voranstehenden Ansprüche, **dadurch gekennzeichnet, dass** das mindestens eine Strömungshinderungselement (30, 60) eine das Endsegment (16) umströmende Außenströmung (42) in ihrer Strömungsrichtung um mindestens 90° umlenkt.

5. Wagenkasten nach einem der voranstehenden Ansprüche, **dadurch gekennzeichnet, dass** die an der Außenkontur (24) des Endbereichs entlanglaufende Außenströmung (42) in der aktiven Stellung der Endkappe (30) in einem Innenraum(44) der Endkappe (30) eine Umlenkung erfährt und aus einem Kanal (74) als Gegenströmung (72) austritt.

6. Wagenkasten nach Anspruch 5, **dadurch gekennzeichnet, dass** der Kanal (74) durch ein Strömungsführungselement (62) und eine Wand (66) der Endkappe (30) gebildet ist.

7. Wagenkasten nach Anspruch 5 oder 6, **dadurch gekennzeichnet, dass** der Kanal (74) die Gegenströmung (72) so austreten lässt, dass diese einer das Endsegment (16) umgebenden Außenströmung (42) entgegensetzt gerichtet ist.

## Claims

1. Carriage body for rail vehicles, comprising a main segment (12) and proceeding from the main segment (12) an end segment (16) narrowing towards one end (22) from a full cross-sectional surface area of the main segment (12) contrary to a direction of travel, said end segment comprising at least one flow hindering element (30, 60) adapted to be brought from an inactive position permitting the external flows (42) of the end segment (16) without interference into an active position hindering the external flows (42) of the end segment (16) in order to effect braking, wherein the at least one flow hindering element (30) is formed by a section of the end segment (16) movable contrary to the direction of travel (14) during movement from the inactive position into the active position, and wherein the at least one flow hindering element (30) is formed by an end cap (30) of the end segment (16), said cap being adapted to lift away from the end segment stump (36) of the end segment (16) adjoining the main segment (12) contrary to the direction of travel (14) during movement from the inactive into the active position,
**characterized in that** the at least one flow hindering element comprises an air conducting element (60) adapted to be extended out of the end cap (30) supplementary to the end cap (30), said element being arranged within the external contour (24) of the end segment (16) in its inactive position and projecting outwards beyond the external contour (24) of the end segment (16) in its active position.

2. Carriage body as defined in claim 1, **characterized in that** the end cap (30) has a wall (46) having the external flow (42) flowing around the end section (16) flowing onto it in the active position and not having said external flow flowing onto it in the inactive position of the end cap (30).

3. Carriage body as defined in claim 1 or 2, **characterized in that** the flow hindering element (60) projects beyond the external contour (24) of the end segment (16) like a shield in the active position.

4. Carriage body as defined in any one of the preceding claims, **characterized in that** the at least one flow hindering element (30, 60) diverts an external flow (42) flowing around the end segment (16) through at least 90° in its direction of flow.

5. Carriage body as defined in any one of the preceding claims, **characterized in that** the external flow (42) flowing along the external contour (24) of the end region experiences a diversion in an interior space (44) of the end cap (30) in the active position of the end cap (30) and exits from a channel (74) as a counterflow (72).

6. Carriage body as defined in claim 5, **characterized in that** the channel (74) is formed by a flow guiding element (62) and a wall (66) of the end cap (30).

7. Carriage body as defined in claim 5 or 6, **characterized in that** the channel (74) allows the counterflow (72) to exit such that it is directed contrary to an external flow (42) surrounding the end segment (16).

## Revendications

1. Caisse de véhicule pour véhicules ferroviaires, comprenant un segment principal (12) et un segment d'extrémité (16) se rétrécissant, depuis une surface transversale pleine du segment principal (12) jusqu'à une extrémité (22), en sens inverse d'une direction de déplacement à partir du segment principal (12), , lequel comporte au moins un élément d'entrave à l'écoulement (30, 60) qui peut être amené d'une position inopérante, n'opposant aucun obstacle aux écoulements extérieurs (42) du segment d'extrémité (16), à une position opérante entravant lesdits écoulements extérieurs (42) sur ledit segment d'extrémité (16) et visant l'effet de freinage, le au moins un élément d'entrave à l'écoulement(30)étant formé par une portion du segment d'extrémité (16) pouvant être mobile en sens inverse de la direction de déplacement (14) lors d'un mouvement de la position inopérante à la position opérante, et le au moins un élément d'entrave à l'écoulement (30) est formé d'une coiffe d'extrémité (30) du segment d'extrémité (16) qui, lors d'un mouvement de la position inopérante à la position opérante, peut être détachée du mât de segment d'extrémité (36) du segment d'extrémité (16) raccordé au segment principal (12), en sens inverse de la direction de déplacement (14),
**caractérisée par le fait que** le au moins un élément d'entrave à l'écoulement comprend un élément déflecteur d'air (60) qui peut être déployé hors de la coiffe d'extrémité (30), en complément de ladite coiffe d'extrémité (30), et est agencé à l'intérieur du profil extérieur (24) du segment d'extrémité (16) dans sa position inopérante, et fait saillie vers l'extérieur, dans sa position opérante, au-dessus dudit profil extérieur (24) dudit segment d'extrémité (16).

2. Caisse de véhicule selon la revendication 1, **caractérisée par le fait que** la coiffe d'extrémité (30) présente une paroi (46) qui peut être impactée par un écoulement dans la position opérante et qui, dans la position inopérante de ladite coiffe d'extrémité (30), ne peut pas être impactée par l'écoulement extérieur (42) circulant autour du segment d'extrémité (16).

3. Caisse de véhicule selon la revendication 1 ou 2, **caractérisée par le fait que** l'élément d'entrave à l'écoulement (60) fait saillie au-dessus du profil extérieur (24) du segment d'extrémité (16) dans la position opérante, à la manière d'un écran.

4. Caisse de véhicule selon l'une des revendications précédentes, **caractérisée par le fait que** le au moins un élément d'entrave à l'écoulement(30, 60) dévie d'au moins 90°, dans sa direction d'écoulement, un écoulement extérieur (42) circulant autour du segment d'extrémité (16).

5. Caisse de véhicule selon l'une des revendications précédentes, **caractérisée par le fait que** l'écoulement extérieur (42), longeant le profil extérieur (24) de la zone d'extrémité, subit une déviation dans un espace interne (44) de la coiffe d'extrémité (30) dans la position opérante de ladite coiffe d'extrémité (30), et sort d'un canal (74) sous la forme d'un écoulement (72) à contre-courant.

6. Caisse de véhicule selon la revendication 5, **caractérisée par le fait que** le canal (74) est formé par un élément de guidage d'écoulement (62), et par une paroi (66) de la coiffe d'extrémité (30).

7. Caisse de véhicule selon la revendication 5 ou 6, **caractérisée par le fait que** le canal (74) libère l'écoulement (72) à contre-courant de façon telle que ce dernier soit dirigé en sens inverse d'un écoulement extérieur (42) entourant le segment d'extrémité (16).
